# EUROPÄISCHE PATENTSCHRIFT

(11) **EP 0 995 589 B1**
(45) Veröffentlichungstag und Bekanntmachung des Hinweises auf die Patenterteilung: **19.11.2003**
(21) Anmeldenummer: 99119272.5
(22) Anmeldetag: 28.09.1999
(51) Int. Cl.: B31B 19/98, B65H 31/30

(54) **Vorrichtung zum Abtransportieren von stapelbaren Beutelpaketen, insbesondere Kunststoffbeuteln mit Bodenfalte**
Device for transferring stacks of bags, in particular plastic bags with bottom fold
Dispositif pour transférer des piles de sacs, en particulier de sacs à fond plié

(30) Priorität: 19.10.1998 DE 19847932
(43) Veröffentlichungstag der Anmeldung: 26.04.2000
(73) Patentinhaber: LEMO Maschinenbau GmbH, D-53859 Niederkassel-Mondorf (DE)
(72) Erfinder: Wuits, Hans Bert, 53844 Troisdorf (DE); Schneider, Jakob, 53859 Niederkassel (DE)
(74) Vertreter: Thul, Hermann, Dipl.-Phys.

(56) Entgegenhaltungen:
- DE-C- 3 834 115
- US-A- 5 087 169
- PATENT ABSTRACTS OF JAPAN vol. 1996, no. 12, 26. Dezember 1996 (1996-12-26) -& JP 08 217245 A (I A SYST KK;HIROSE MINORU), 27. August 1996 (1996-08-27)

## Beschreibung

Die Erfindung bezieht sich auf eine Vorrichtung zum Abtransportieren von stapelbaren Beutelpaketen, insbesondere Kunststoffbeuteln mit Bodenfalte, mit einer eine schrittweise bewegbaren Stiftstapelkette mit Stapelstiften aufweisenden Stiftstapelfördereinrichtung und einer Abnahmestation, die einen Roboter mit einer zangenartig ausgebildeten Greifhand aufweist.

Einen allgemeinen Hinweis auf die Verwendung eines Roboters, um durch diesen den Abnahmevorgang in eine Abnahmestation zu automatisieren, läßt sich der DE 38 34 115 C1 entnehmen. Die bekannte Vorrichtung geht dabei aber davon aus, den Zusammenhalt der einzelnen Kunststoffbeutel im Beutelstapel durch die Verwendung von Drahtbügeln zu erreichen. Einzelheiten, wie nun letztendlich der Roboter bei der Abnahme der Kunststoffbeutel eingesetzt werden soll, läßt sich dieser Schrift nicht entnehmen, vielmehr wird dort ganz allgemein angegeben, dass der Einsatz eines Roboters wegen seiner Kompliziertheit und Kostspieligkeit bisher nicht beschritten worden ist.

Bei der Stapelabnahme ist es auch allgemein bekannt, auf den Einsatz von Drahtbügeln zum Zusammenhalten der einzelnen Kunststoffbeutel im Beutelstapel zu verzichten. Vielmehr erfolgt eine Verblockung der einzelnen Kunststoffbeutel zum Beutelstapel bereits im Stiftstapelförderer und zwar dadurch, dass die Kunststoffbeutel an bestimmten Stellen, beispielsweise in einem durch eine Perforationslinie begrenzten Bereich, durch Druck und Hitze miteinander verschmolzen werden. Auf diese Weise kommt man zwar bei der Herstellung der Kunststoffbeutel zu einer wesentlichen Vereinfachung, zumal sich auch die Abnahme der Beutelstapel von der Stiftstapelfördereinrichtung wesentlich besser vollziehen läßt und schließlich auch das Verpacken der Kunststoffbeutel in Kartons oder dergleichen merklich vereinfacht wird. Dennoch obliegt es der Bedienungsperson, die Qualität der verblockten Beutelpakete zu begutachten und zur Verpackung beispielsweise in einen Karton vorzubereiten. Dieses Vorbereiten zum Abpacken in einen Karton macht nun insbesondere bei Kunststoffbeuteln mit Bodenfalte besondere Schwierigkeiten. Das ist deshalb der Fall, weil die im Stapel aufeinanderliegenden Kunststoffbeutel im gefalteten Bodenbereich auffächern und somit dort dicker als im flachliegenden Kopfbereich sind. Der Bodenbereich neigt je nach Beutelart und -größe dazu, umzuschlagen, wenn das Beutelpaket in eine waagerechte bzw. nahezu waagerechte Lage kommt. Eine Bedienungsperson hat daher selbst bei Einsatz einer robotergesteuerten Multifunktionshand mitunter alle Hände voll zu tun, um einwandfreie Beutelpacken sicherzustellen. Dies gelingt oft nur dann, wenn die Produktionsgeschwindigkeit reduziert wird, damit die Abnahmeperson der Paketaufbereitung folgen kann.

Der Erfindung liegt die Aufgabe zugrunde, eine zum Abtransportieren von stapelbaren Beutelpaketen, insbesondere Kunststoffbeuteln mit Bodenfalte geeignete Vorrichtung der eingangs genannten Art zu schaffen, durch die die Abnahme und Übergabe von Beutelstapeln, insbesondere wenn es sich dabei um paketweise gestapelte Kunststoffbeutel mit Bodenfalte handelt, von einer Stiftstapelfördereinrichtung zu einer Abpackstation durch entsprechende Automatisierung noch weiter vereinfacht und beschleunigt wird.

Diese Aufgabe wird erfindungsgemäß dadurch gelöst, dass die Stiftstapelfördereinrichtung im Bereich der Abnahmestation eine das jeweils zur Abnahme bereite Beutelpaket aus einer an den Stapelstiften im wesentlichen hängenden Lage in eine im wesentlichen horizontale Position bringbare Schwenkplatte und die Greifhand zwei mit Abstand sich gegenüberliegende, das Beutelpaket beidseitig ergreifende Klemmeinrichtungen sowie ein höhenverstellbar gelagertes, das Beutelpaket im wesentlichen mittig beaufschlagendes Drückelement aufweist. Mit den Mitteln nach der Erfindung kommt man zu einer vergleichsweise einfachen Lösung, um das unerwünschte Umschlagen des Bodenfaltbereiches der Kunststoffbeutel zu verhindern. Dies wird im einzelnen dadurch erreicht, dass das in der Stiftstapelfördereinrichtung herabhängende Beutelpaket mit der Schwenkplatte in eine im wesentlichen waagerechte Position gebracht wird, aus welcher das durch das Drückelement bzw. ein damit verbundenes Niederhalteelement im Bodenfaltbereich beaufschlagte Beutelpaket durch die Greiferhand ergriffen und an den gegenüberliegenden Seiten mittels der Klemmeinrichtungen gehalten wird, wobei durch Relativbewegung des Drückelementes gegenüber dem Beutelpaket eine leichte Vorknickung des Paketes geschaffen wird, so dass der Bodenfaltbereich nicht mehr umschlagen kann. Mittels eines die Greiferhand tragenden Roboters und dessen Transportbewegungen kann nach Lösen der äußeren Klemmeinrichtungen durch Abwärtsbewegung des Drückelementes das Beutelpaket in einen bereitstehenden Karton oder dergleichen abgelegt werden, wobei das Drückelement unter Bildung einer V-Knickung das Beutelpaket aus den freigebenden Klemmeinrichtungen auf den Kartonboden bzw. auf bereits darin liegende Pakete abgelegt werden kann. Die Greiferhand läßt das Beutelpaket mithin nicht einfach fallen, vielmehr wird dies optimal positioniert auf das jeweils letzte Beutelpaket abgelegt.

In zweckmäßiger Ausgestaltung der Erfindung ist das Drückelement von einer sich im wesentlichen in Längsrichtung des Beutelpakets erstreckenden Vorknickleiste gebildet.

Die Vorknickleiste bzw. eine diese haltende Tragleiste ist über höhenverstellbare Verstellzylinder an einer ersten Tragplatte befestigt, die - direkt oder indirekt - mit einem Auslegearm des Roboters verbunden ist.

Die erste Tragplatte sowie eine damit verschachtelt angeordnete zweite Tragplatte dienen zur Aufnahme von Führungsschienen für darin verstellbar gelagerte Tragarme, an deren jeweils paarweise nach einer Seite weisenden freien Enden Haltewinkel der Klemmeinrichtungen angeschlossen sind. Die Haltewinkel lassen sich über Zylinder-Kolben-Einheiten auf die Abmessungen der jeweils zu transportierenden Beutelpakete einstellbar verschieben.

Ein bevorzugtes Ausführungsbeispiel der Erfindung ist in der Zeichnung dargestellt und wird im folgenden näher erläutert. Es zeigen:
- Figur 1: eine Aufsicht auf einen Teil einer Beutelherstellmaschine mit einer Stiftstapelfördereinrichtung, einschließlich eines Roboters mit Greiferhand sowie einer zugehörigen Ablagestation,
- Figur 2: eine Seitenansicht der Stiftstapelfördereinrichtung mit einem Teil der Greifhand in vergrößertem Maßstab,
- Figur 3: eine teilweise Schnittansicht der Greifhand in einer auseinandergefahrenen Stellung,
- Figur 4: die zugehörige Aufsicht auf die Greifhand,
- Figur 5: eine schematische Seitenansicht der Greifhand,
- Figur 6: eine der Figur 3 entsprechende Schnittdarstellung, jedoch in einer ein Beutelpaket klemmenden Stellung und
- Figur 7: eine der Figur 6 entsprechende Darstellung in einer das Beutelpaket abgebenden Stellung.

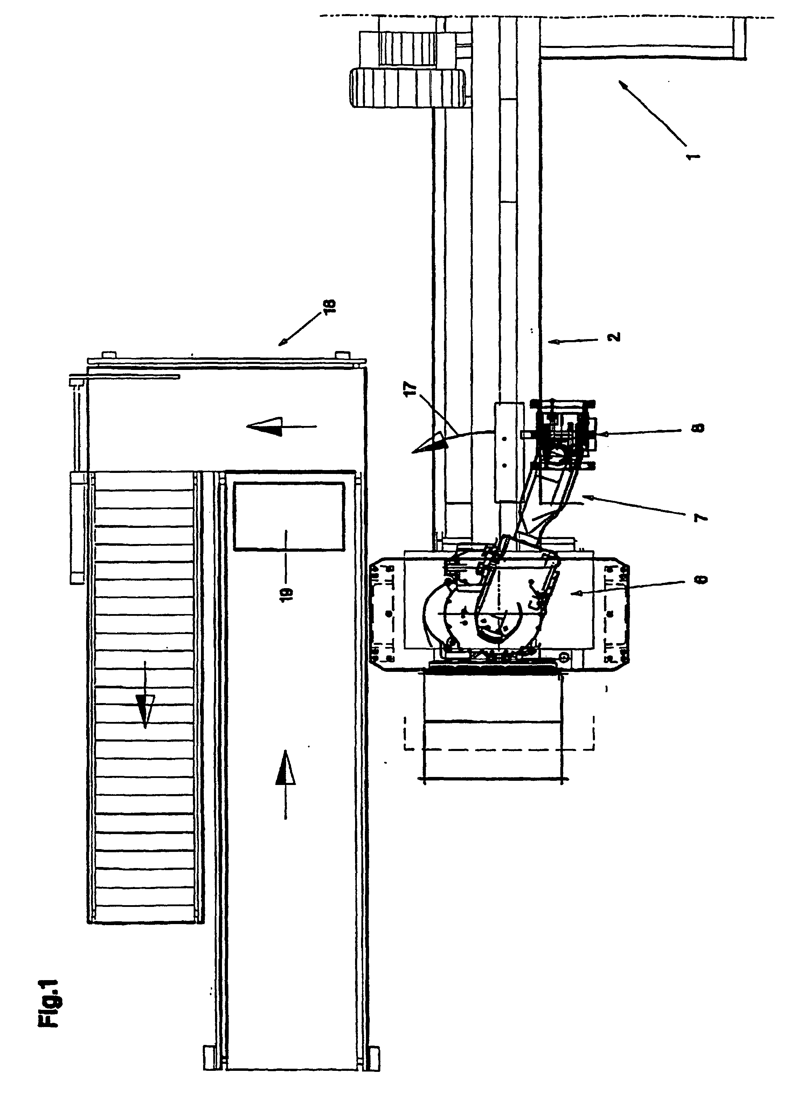

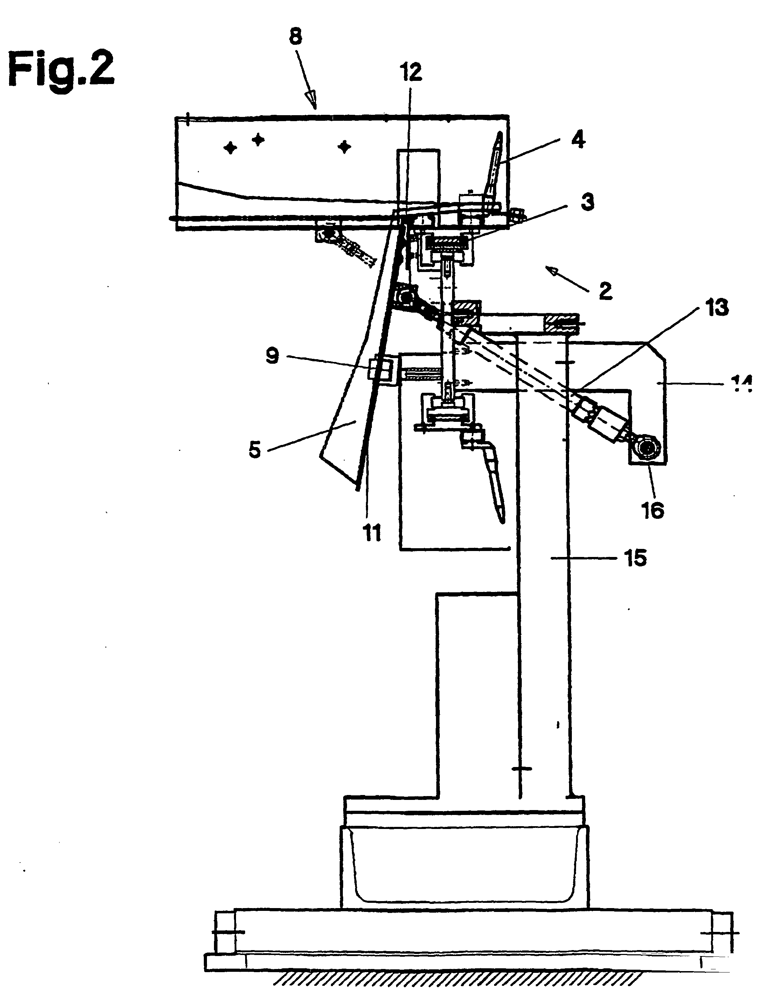

In Figur 1 ist eine Beutelherstellmaschine 1 schematisch dargestellt, die zum Herstellen von Kunststoffbeuteln, beispielsweise Kunststoffbeuteln mit Bodenfalte ausgebildet und eingerichtet ist. Zu diesem Zweck wird von einer Wickelrolle eines nicht dargestellten Abwickelstandes eine thermoplastische Kunststoffolienbahn abgewickelt, die beispielsweise als Schlauchfolienbahn ausgebildet sein kann. Innerhalb der Beutelherstellmaschine 1 wird die Schlauchfolienbahn über nicht dargestellte Antriebswalzen und Spannwalzen geführt. Mittels gleichfalls nicht dargestellter Einrichtungen können in die Kunststoffolienbahn zwei Aufhängelöcher eingebracht werden und mittels einer nicht dargestellten Quer-Trenn-Schweißeinrichtung einzelne Beutel von der Schlauchfolienbahn abgetrennt werden. Schließlich werden diese Beutel an eine Stiftstapelfördereinrichtung 2 mit einer schrittweise umlaufend angetriebenen Stiftstapelkette 3 transportiert. Auf der Stiftstapelfördereinrichtung kontinuierlich gesammelte Kunststoffbeutel lassen sich in an sich bekannter Weise zu Beutelpaketen sammeln. Zu diesem Zweck weist die Stiftstapelfördereinrichtung an der Stiftstapelkette 3 paarweise angeordnete Stapelstifte 4 auf, an denen, wie aus Figur 2 hervorgeht, das Beutelpaket 5 über die Aufhängeöffnungen in den Beuteln aufgehängt ist und im wesentlichen frei hängend nach unten weist. Die paketweise gesammelten Beutel werden in an sich bekannter Weise in der Stiftstapelfördereinrichtung miteinander verblockt.

Nach der Bildung eines verblockten Beutelstapels 5 auf der Stiftstapelkette 3 wird der fertige Beutelstapel am Ende der Stiftstapelfördereinrichtung 2 mit Hilfe eines am Ende der Stiftstapelfördereinrichtung 2 angeordneten Roboters 6 abgenommen, der über einen Auslegearm 7 eine Greifhand 8 trägt. Die Funktion des Roboters bzw. der Greifhand 8 wird weiter unten näher erläutert.

An der Entnahmestelle der Stiftstapelfördereinrichtung 2 ist zur besseren Führung des Beutelstapels 5 eine freibeweglich drehbare Rolle 9 vorgesehen, die den Beutelstapel 5 mit einem geringfügigen Abstand von einer Schwenkplatte 11 hält, die am oberen Ende der Stiftstapelfördereinrichtung 2 um eine im wesentlichen horizontale Achse 12 schwenkbar gelagert ist. Mit Hilfe dieser Schwenkplatte 11 läßt sich das Beutelpaket 5 aus der in Figur 2 mit strichpunktierten Linien angedeuteten hängenden Position in eine im wesentlichen waagerechte Position bringen, die in Figur 2 mit strichpunktierten Linien angedeutet ist. Zum Verschwenken der Schwenkplatte dient ein Verstellzylinder 13, der an einem Arm 14 eines Traggestells 15 bei 16 schwenkbeweglich angelenkt ist. Aus Figur 2 ist ferner ein Teil der Greifhand dargestellt, um die Lage anzudeuten, aus welcher Position in der weiter unten näher beschriebener Weise die Greifhand 8 das im wesentlichen horizontal liegende Beutelpaket 5 ergreift und im Sinne des Pfeils 17 zu einer Abnahmestation 18 führt, in der beispielsweise leere Kartons 19 bereit stehen, um eine Vielzahl von Beutelpaketen 5 aufnehmen zu können.

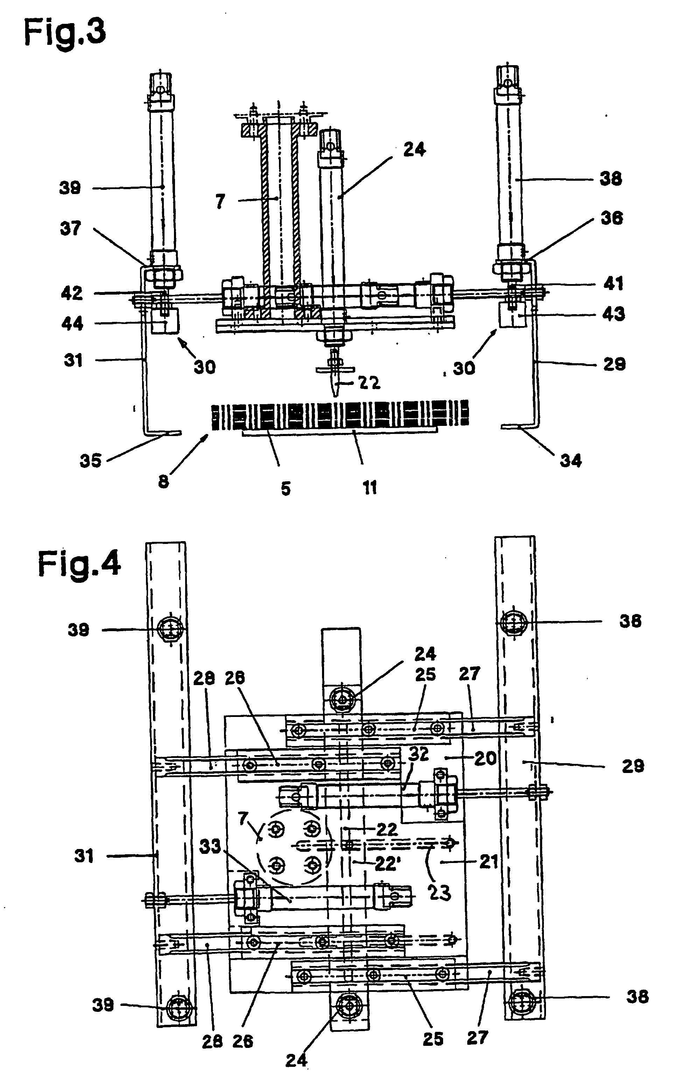

Wie aus den Figuren 3 und 4 hervorgeht, weist die Greifhand 8 ineinander verschachtelt angeordnete und über eine Längsführung 23 gegeneinander verschiebbare Tragplatten 20, 21 auf, deren eine am Auslegearm 7 des Roboters 6 befestigt ist. Mit Abstand zur Unterseite der Tragplatte 20 sitzt über eine Tragleiste 22' ein Drückelement 22 in Form einer Vorknickleiste. Die Vorknickleiste 22 ist über Verstellzylinder 24 höhenverstellbar und zwar für den weiter unten näher erläuterten Zweck. An den Tragplatten 20, 21 sind versetzt zueinander Führungsschienen 25, 26 angeordnet und zwar jeweils paarweise nach der einen oder anderen Seite. Die Führungsschienen dienen zur Aufnahme von darin verschieblich gelagerten Tragarmen 27, 28, an denen diametral gegenüberliegende Haltewinkel 29, 31 geführt sind. Zur gegenseitigen Verstellung der Haltewinkel 29 und 31 in eine das Beutelpaket 5 aufnehmende und in eine abgebende Stellung ist jeweils eine Zylinder-Kolben-Einheit 32, 33 vorgesehen, deren eine an der einen Tragplatte 20 und deren andere an der anderen Tragplatte 21 befestigt ist. Die Haltewinkel 31 weisen untere Stege 34, 35 und obere Stege 36, 37 auf. Jeweils in den oberen Stegen 36, 37 sind Klemmzylinder 38, 39 befestigt, deren Kolbenstangen 41, 42 Klemmstücke 43, 44 aufweisen.

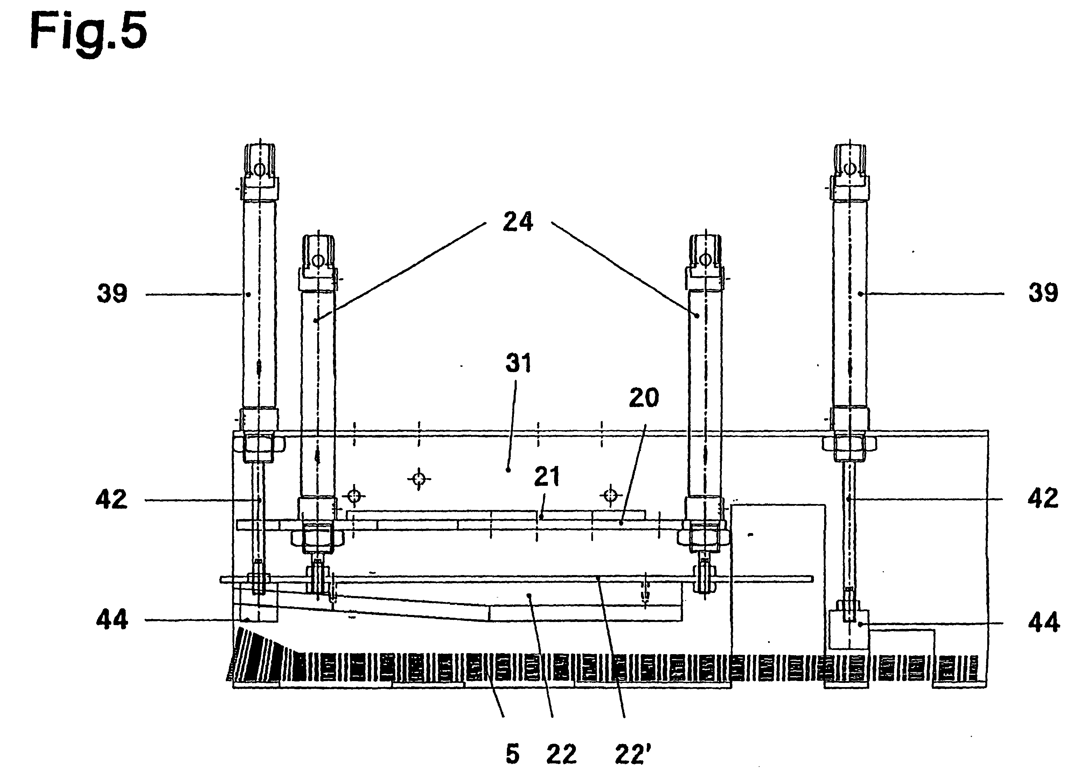

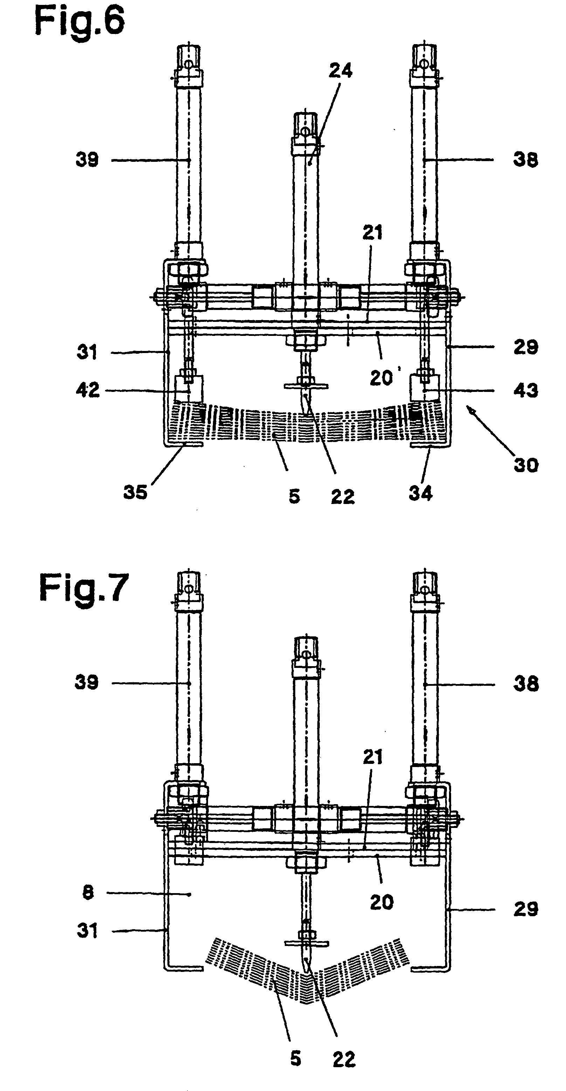

Während in den Figuren 3 und 4 die Greifhand 8 mit ihren Klemmeinrichtungen 30 sich in einer ausgefahrenen Stellung befindet, um ein Beutelpaket 5 aufzunehmen, ist in den Figuren 5 und 6 die Abgabestellung gezeigt.

Die erfindungsgemäße Vorrichtung arbeitet wie folgt:
Die Greiferhand steht in der in Figur 3 gezeigten Aufnahmestellung, d. h. die Haltewinkel 29 und 31 sind nach außen gefahren. Die Schwenkklappe 11 der Stiftstapelfördereinrichtung wird schließlich über den Stellzylinder 13 nach oben verschwenkt, so dass das Beutelpaket 5 aus der im wesentlichen frei nach unten hängenden Position in die in Figur 2 gezeigte, im wesentlichen horizontale Position gelangt, so wie das auch aus Figur 3 ersichtlich ist. Danach werden die Haltewinkel 29, 31 über ihre jeweils zugeordneten Zylinder-Kolben-Einheiten 32, 33 nach innen gefahren, so dass das Beutelpaket von den unteren Stegen 34, 35 der Haltewinkel 29, 31 aufgenommen wird. In der eingefahrenen Halteposition kann im Zusammenwirken mit dem Drückelement 22 erreicht werden, dass der Bodenfaltbereich nicht nach innen umschlagen kann. Erforderlichenfalls kann das Beutelpaket dabei durch die Vorknickleiste 22, die zum Bodenfaltbereich des Beutelpakets schräg nach oben verläuft, mittig leicht vorgeknickt werden, so wie das in Figur 6 angedeutet ist. Durch die inzwischen ausgefahrenen Klemmzylinder 38, 39 bzw. über die an deren Kolbenstangen 41, 42 befindlichen Klemmstücke 43, 44 werden die Beutel bzw. wird das Beutelpaket beidseitig gehalten und auf diese Weise das Beutelpaket in seiner Lage zentriert. Das so festgeklemmte Beutelpaket wird mit Hilfe des Roboters 6 in eine Abnahmeposition im Bereich der Abpackstation 18 gebracht und zwar dergestalt, dass die Greifhand 8 oberhalb eines zu füllenden Kartons 19 zu liegen kommt und gegebenenfalls in diesen einfährt. Sobald die richtige Position erreicht ist, fahren die Klemmzylinder 38, 39 bei unverändert positionierten Haltewinkeln 29, 31 nach oben und das Drückelement bzw. die Vorknickleiste 22 wird ausgefahren, so dass das Paket V-förmig geknickt in den Karton eingelegt wird, so wie das in Figur 7 angedeutet ist. Durch diese Maßnahme wird sichergestellt, dass die verdickten bzw. auffächernden Faltbodenbereiche nicht umschlagen können, vielmehr das Beutelpaket einwandfrei in den bereitstehenden Karton 19 eingelegt werden kann. Inzwischen ist die Schwenkplatte 11 wieder in ihre im wesentlichen nach unten weisende Ausgangsposition zurückgeschwenkt worden.

## Patentansprüche

1. Vorrichtung zum Abtransportieren von stapelbaren Beutelpaketen (5), insbesondere Kunststoffbeuteln mit Bodenfalte, mit einer eine schrittweise bewegbare Stiftstapelkette (3) mit Stapelstiften (4) aufweisenden Stiftstapelfördereinrichtung (2) und einer Abnahmestation (18), die einen Roboter (6) mit einer zangenartig ausgebildeten Greifhand (8) aufweist, **dadurch gekennzeichnet, dass** die Stiftstapelfördereinrichtung (2) im Bereich der Abnahmestation (18)eine das jeweils zur Abnahme bereite Beutelpaket (5) aus einer an den Stapelstiften (4) im wesentlichen hängenden Lage in eine im wesentlichen horizontale Position bringbare Schwenkplatte (11) und die Greifhand (8), die über Tragplatten (20, 21) an einem Auslegerarm (7) des Roboters (6) befestigt ist, zwei mit Abstand sich gegenüberliegende, das Beutelpaket (5) beidseitig ergreifende Klemmeinrichtungen (30) sowie ein höhenverstellbar gelagertes, das Beutelpaket (5) im wesentlichen mittig beaufschlagendes Drückelement (22) aufweist, wobei das Drückelement von einer sich im wesentlichen in Längsrichtung des Beutelpaketes (5) erstreckenden Tragleiste (22') mit Vorknickleiste (22) gebildet ist.

2. Vorrichtung nach Anspruch 1, **dadurch gekennzeichnet, dass** die Vorknickleiste (22) mit Abstand zu den am Auslegerarm (7) des Roboters (6) befestigten Tragplatten (20, 21) befestigt ist, an denen direkt oder indirekt Verstellzylinder (24) für die Vorknickleiste (22) sitzen.

3. Vorrichtung nach Anspruch 2, **dadurch gekennzeichnet, dass** an den Tragplatten (20, 21) Führungsschienen (25, 26) für darin verstellbar gelagerte Tragarme (27, 28) befestigt sind, an deren jeweils paarweise nach einer Seite weisenden freien Enden Haltewinkel (29, 31) der Klemmeinrichtungen (30) angeschlossen sind.

4. Vorrichtung nach Anspruch 3, **dadurch gekennzeichnet, dass** die Haltewinkel (29, 31) über an den Tragplatten (20, 21) abgestützte Zylinder-Kolben-Einheiten (32, 33) verstellbar sind.

5. Vorrichtung nach einem der Ansprüche 3 oder 4, **dadurch gekennzeichnet, dass** die Haltewinkel (29, 31) der Klemmeinrichtungen (30) untere und obere, nach innen abgewinkelte Stege (34, 35, 36, 37) aufweisen und dass an den oberen Stegen (36, 37) Klemmzylinder (38, 39) befestigt sind, deren Kolbenstange (41, 42) sich im wesentlichen parallel zu der Vorknickleiste (22) erstreckende Klemmstücke (43, 44) tragen.

## Claims

1. Apparatus for transporting away stackable groups of bags (5), in particular plastic bags with a bottom fold, having a wicket conveyor (2), which has a wicket chain (3) which can be moved in a stepwise manner and has wicket pins (4), and having a removal station (18), which has a robot (6) with a pincer-like gripping hand (8), **characterized in that** the wicket conveyor (2), in the region of the removal station (18), has a pivoting plate (11), by means of which the group of bags (5) which is ready for removal in each case can be moved into an essentially horizontal position from a position in which it is essentially hanging on the wicket pins (4), and the gripping hand (8), which is fastened on an extension arm (7) of the robot (6) via carrying plates (20, 21), has two clamping arrangements (30), which are located at a distance apart from one another and grip the group of bags (5) on both sides, and a pressure-exerting element (22), which is mounted in a height-adjustable manner and acts essentially centrally on the group of bags (5), the pressure-exerting element being formed by a carrying bar (22') which extends essentially in the longitudinal direction of the group of bags (5) and has an inflecting bar (22).

2. Apparatus according to Claim 1, **characterized in that** the inflecting bar (22) is fastened at a distance from the carrying plates (20, 21), which are fastened on the extension arm (7) of the robot (6) and on which adjusting cylinders (24) for the inflecting bar (22) are seated directly or indirectly.

3. Apparatus according to Claim 2, **characterized in that** fastened on the carrying plates (20, 21) are guide rails (25, 26) for carrying arms (27, 28), which are mounted in an adjustable manner in said guide rails and at the free ends of which, the latter being oriented to one side in pairs in each case, retaining angles (29, 31) of the clamping arrangements (30) are connected.

4. Apparatus according to Claim 3, **characterized in that** the retaining angles (29, 31) can be adjusted via cylinder/piston units (32, 33) supported on the carrying plates (20, 21).

5. Apparatus according to either of Claims 3 and 4, **characterized in that** the retaining angles (29, 31) of the clamping arrangements (30) have bottom and top, inwardly angled crosspieces (34, 35, 36, 37), and **in that** clamping cylinders (38, 39) are fastened on the top crosspieces (36, 37), the piston rods (41, 42) of said clamping cylinders bearing clamping members (43, 44) extending essentially parallel to the inflecting bar (22).

## Revendications

1. Dispositif pour enlever des paquets (5) de sacs empilés, en particulier des sacs en matière synthétique à fond plié, avec un dispositif (2) de transport de tiges d'empilement qui présente une chaîne (3) dotée de tiges d'empilement (4) qui peut se déplacer par pas et un poste d'enlèvement (18) qui présente un robot (6) doté d'une main de saisie (8) à configuration dentelée, **caractérisé en ce que** pour l'enlèvement du paquet (5) de sacs, le dispositif (2) de transport de tiges d'empilement présente dans la région du poste d'enlèvement (18) une plaque pivotante (11) qui peut être amenée depuis une position essentiellement suspendue aux tiges d'empilement (4) jusque dans une position essentiellement horizontale, la main de saisie (8) fixée par des plaques porteuses (20, 21) sur un bras (7) du robot (6) présentant deux dispositifs de pinçage (30) situés face à face à distance l'un de l'autre et saisissant le paquet (5) de sacs des deux côtés ainsi qu'un élément à poussoir (22) monté de manière ajustable en hauteur et lui sollicite le paquet (5) de sacs essentiellement en son milieu, l'élément à poussoir étant formé par une languette porteuse (22') qui s'étend essentiellement dans le sens de la longueur du paquet (5) de sacs et qui est dotée d'une languette de pré-coudage (22).

2. Dispositif selon la revendication 1, **caractérisé en ce que** la languette de pré-coudage (22) est fixée à distance des plaques porteuses (20, 21) fixées au bras (7) du robot (6), des cylindres (24) de déplacement de la languette de pré-coudage (22) s'appuyant directement ou indirectement sur ces plaques porteuses.

3. Dispositif selon la revendication 2, **caractérisé en ce que** des rails de guidage (25, 26) de bras porteurs (27, 28) qui y sont montés à déplacement sont fixés aux plaques porteuses (20, 21), des cornières porteuses (29, 31) des dispositifs de pinçage (30) se raccordant par paires aux extrémités libres, tournées chacune vers un côté, de ces bras porteurs.

4. Dispositif selon la revendication 3, **caractérisé en ce que** les cornières porteuses (29, 31) peuvent être déplacées par des unités (32, 33) à cylindre et piston qui s'appuient sur les plaques porteuses (20, 21).

5. Dispositif selon l'une des revendications 3 et 4, **caractérisé en ce que** les cornières porteuses (29, 31) des dispositifs de pinçage (30) présentent des ailes (34, 35, 36, 37) supérieures et inférieures coudées vers l' intérieur et **en ce que** des cylindres de pinçage (38, 39) dont les tiges de piston (41, 42) portent des pièces de pinçage (43, 44) qui s'étendent essentiellement en parallèle à la languette de pré-coudage (22) sont fixés aux ailes supérieures (36, 37).
